# EUROPEAN PATENT SPECIFICATION

(11) **EP 3 762 881 B1**
(45) Date of publication and mention of the grant of the patent: **15.01.2025**
(21) Application number: 18908520.2
(22) Date of filing: 12.10.2018
(51) Int. Cl.: G06Q 20/38, G06Q 20/40

(54) **SYSTEM AND METHODS OF ELECTRONIC IDENTITY VERIFICATION**
SYSTEM UND VERFAHREN ZUR ELEKTRONISCHEN IDENTITÄTSÜBERPRÜFUNG
SYSTÈME ET PROCÉDÉS DE VÉRIFICATION D'IDENTITÉ ÉLECTRONIQUE

(30) Priority: 09.03.2018 US 201862641086 P
(43) Date of publication of application: 13.01.2021
(73) Proprietor: MONERIS SOLUTIONS CORPORATION, Toronto Ontario M8X 2X2 (CA)
(72) Inventor: ALI, Shem, Toronto, Ontario M8X 2X2 (CA); MATAR, Amer, Toronto, Ontario M8X 2X2 (CA)
(74) Representative: Altmann Stößel Dick Patentanwälte PartG mbB
(86) International application number: PCT/CA2018/051284
(87) International publication number: WO 2019/169470

(56) References cited:
- EP-A1- 2 688 026
- EP-A1- 2 779 064
- US-A1- 2014 129 445
- US-A1- 2016 142 555
- US-A1- 2017 178 115

## Description

### FIELD

The present disclosure generally relates to the field of electronic payments, and in particular to system and methods of electronic identity verification.

### INTRODUCTION

Electronic payments may be made where a fully standalone, secure point of sale terminal (e.g., a handheld payment terminal) may be used to receive a cardholder's personal identification number (PIN) entry when making a purchase with a merchant.
EP2779064A1 discloses a method and system for mobile transaction payments. A merchant device generates a machine-readable code containing merchant information and details of a transaction and displays this to a user device. The user device scans the code, or receives a message via NFC from the merchant device, to retrieve the transaction details and the merchant information. The user device then communicates this information, along with secure account information containing a virtual credit card or other payment type, to a merchant acquiring host, which processes the payment in association with an issuer host. Upon receipt of authorization from the issuer host, the merchant acquiring host informs both the merchant and the use of the status of the transaction.
US2017/178115A1 discloses systems and methods for display of a transaction history using a payment card display device for secure transaction processing. A user may visit a merchant location for a merchant and purchase one or more items from the merchant using a payment card. The payment card may be equipped with a display device, as well as an antenna or other communication module. Once the payment card is processed for the transaction, a merchant device at the merchant location may communicate a message to the payment card for display on the display device of the payment card.
US2014/129445A1 discloses a method for processing a payment. A seller-end electronic device transmits payment information to a transaction platform, which transmits an authentication code to the seller-end electronic device. A buyer-end electronic device allows the user thereof to input a verification code associated with the authentication code, and to transmit the verification code to the transaction platform. When the verification code is deemed valid, the buyer-end electronic device receives a personal identification number (PIN), and transmits a confirm signal to the transaction platform when the PIN is correct. The transaction platform then communicates with a bank terminal to process a payment, according to the payment information.

### SUMMARY

The independent claims 1 and 6 set out a system and a method. In accordance with an embodiment, there is provided a merchant device comprising at least one processor configured to execute instructions, and a memory storing a sequence of instructions which when executed by the at least one processor perform a method of verifying an electronic identity. The at least one processor is configured to obtain a transaction identifier (ID) for a transaction between the merchant device and a cardholder-trusted device, display an element associated with the transaction identifier (ID), and receive a secure cardholder identification from an acquirer application, said secure cardholder identification received by the acquirer application from the cardholder-trusted device.

In accordance with another embodiment, there is provided a method of verifying an electronic identity. The method comprises obtaining at a merchant device a transaction identifier (ID) for a transaction between the merchant device and a cardholder-trusted device, displaying at the merchant device an element associated with the transaction identifier (ID), and receiving a secure cardholder identification from an acquirer application. The secure cardholder identification is received by the acquirer application from the cardholder-trusted device.

In accordance with an embodiment according to the description, there is provided a non-transitory computer-readable medium having instructions thereon which when executed by a processor perform a method of verifying an electronic identity. The method comprises obtaining a transaction identifier (ID) for a transaction between the merchant device and a cardholder-trusted device, displaying an element associated with the transaction identifier (ID), and receiving a secure cardholder identification from an acquirer application. The secure cardholder identification received by the acquirer application from the cardholder-trusted device.

In accordance with another embodiment, there is provided an electronic identity verification system. The system comprises at least one merchant device processor configured to execute instructions, at least one merchant device memory storing a sequence of instructions which when executed by the at least one processor perform a method of verifying an electronic identity, at least one acquirer system processor configured to execute instructions, at least one acquirer system memory storing a sequence of instructions which when executed by the at least one processor perform a method of verifying an electronic identity, at least one cardholder-trusted device processor configured to execute instructions, and at least one cardholder-trusted device memory storing a sequence of instructions which when executed by the at least one processor perform a method of verifying an electronic identity. The at least one merchant device processor is configured to send to an acquirer application a request for a transaction identifier (ID) for a transaction between the merchant device and a cardholder-trusted device, receive from the acquirer application, the transaction ID, display at the merchant device an element associated with the transaction identifier ID, and receive from the acquirer application the secure cardholder identification. The at least one acquirer system processor is configured to receive from the merchant device a request for a transaction identifier (ID) for a transaction between the merchant device and a cardholder-trusted device, obtain the transaction ID, send to the merchant device, the transaction ID, establish a secure transmission connection between the cardholder-trusted device and the acquirer application in response to receiving the element associated with the transaction ID, receive from the cardholder-trusted device the secure cardholder identification, and send to the merchant device the secure cardholder identification. The at least one cardholder-trusted device processor is configured to receive the element associated with the transaction ID and send to the acquirer application the secure cardholder identification.

In accordance with another embodiment, there is provided a method of verifying an electronic identity. The method comprises sending from a merchant device to an acquirer application a request for a transaction identifier (ID) for a transaction between the merchant device and a cardholder-trusted device, obtaining at the acquirer application the transaction ID, receiving at the merchant device from the acquirer application the transaction ID, displaying at the merchant device an element associated with the transaction identifier ID, receiving at the cardholder-trusted device the element associated with the transaction ID, establishing a secure transmission connection between the cardholder-trusted device and the acquirer application in response to receiving the element associated with the transaction ID, receiving at the acquirer application from the cardholder-trusted device the secure cardholder identification, and receiving at the merchant device from the acquirer application the secure cardholder identification.

In accordance with an embodiment according to the description, there is provided a non-transitory computer-readable medium having instructions thereon which when executed by at least one processor perform a method of verifying an electronic identity. The method comprises sending from a merchant device to an acquirer application a request for a transaction identifier (ID) for a transaction between the merchant device and a cardholder-trusted device, obtaining at the acquirer application the transaction ID, receiving at the merchant device from the acquirer application the transaction ID, displaying at the merchant device an element associated with the transaction identifier ID, receiving at the cardholder-trusted device the element associated with the transaction ID, establishing a secure transmission connection between the cardholder-trusted device and the acquirer application in response to receiving the element associated with the transaction ID, receiving at the acquirer application from the cardholder-trusted device the secure cardholder identification, and receiving at the merchant device from the acquirer application the secure cardholder identification.

In accordance with another embodiment, there is provided an acquirer application system. The system comprises at least one processor configured to execute instructions, and a memory storing a sequence of instructions which when executed by the at least one processor perform a method of verifying an electronic identity. The at least one processor is configured to receive from a merchant device a request for a transaction identifier (ID) associated with a transaction between the merchant device and a cardholder-trusted device, obtain the transaction ID, send the transaction ID to the merchant device, establish a secure transmission connection between the cardholder-trusted device and the acquirer application, receive the secure cardholder identification from the cardholder-trusted device, and transmit the secure cardholder identification to the merchant device. The secure transmission connection established in response to a the cardholder-trusted device receiving an element associated with the transaction ID.

In accordance with another embodiment, there is provided a method of verifying an electronic identity. The method comprises receiving at an acquirer application from a merchant device a request for a transaction identifier (ID) associated with a transaction between the merchant device and a cardholder-trusted device, obtaining at the acquirer application the transaction ID, sending from the acquirer application to the merchant device the transaction ID, establishing a secure transmission connection between the cardholder-trusted device and the acquirer application, receiving at the acquirer application from the cardholder-trusted device the secure cardholder identification, and transmitting from the acquirer application to the merchant device the secure cardholder identification. The secure transmission connection established in response to a the cardholder-trusted device receiving an element associated with the transaction ID.

In accordance with an embodiment according to the description, there is provided a non-transitory computer-readable medium having instructions thereon which when executed by a processor perform a method of verifying an electronic identity. The method comprises receiving from a merchant device a request for a transaction identifier (ID) associated with a transaction between the merchant device and a cardholder-trusted device, obtaining the transaction ID, sending to the merchant device the transaction ID, establishing a secure transmission connection with the cardholder-trusted device, receiving from the cardholder-trusted device the secure cardholder identification, and transmitting to the merchant device the secure cardholder identification. The secure transmission connection established in response to a the cardholder-trusted device receiving an element associated with the transaction ID.

In accordance with another embodiment, there is provided a cardholder-trusted device comprising at least one processor configured to execute instructions, and a memory storing a sequence of instructions which when executed by the at least one processor perform a method of verifying an electronic identity. The at least one processor is configured to receive an element associated with a transaction ID for a transaction between the cardholder-trusted device and a merchant device, establish a secure transmission connection with the acquirer application in response to receiving the element associated with the transaction ID, and send a secure cardholder identification to the acquirer application. The transaction ID is associated at an acquirer application with the transaction between the cardholder-trusted device and the merchant device. The secure cardholder identification is to be sent to the merchant device by the acquirer application.

In accordance with another embodiment, there is provided a method of verifying an electronic identity. The method comprises receiving at a cardholder-trusted device an element associated with a transaction ID for a transaction between the cardholder-trusted device and a merchant device, establishing a secure transmission connection with the acquirer application in response to receiving the element associated with the transaction ID, and sending from the cardholder-trusted device to the acquirer application a secure cardholder identification. The transaction ID is associated at an acquirer application with the transaction between the cardholder-trusted device and the merchant device. The secure cardholder identification is to be sent to the merchant device by the acquirer application.

In accordance with another embodiment, there is provided a non-transitory computer-readable medium having instructions thereon which when executed by a processor perform a method of verifying an electronic identity. The method comprises receiving an element associated with a transaction ID for a transaction between the cardholder-trusted device and a merchant device, establishing a secure transmission connection with the acquirer application in response to receiving the element associated with the transaction ID, and sending to the acquirer application a secure cardholder identification. The transaction ID is associated at an acquirer application with the transaction between the cardholder-trusted device and the merchant device. The secure cardholder identification is to be sent to the merchant device by the acquirer application.

In various further aspects, the disclosure provides corresponding systems and devices, and logic structures such as machine-executable coded instruction sets for implementing such systems, devices, and methods.

In this respect, before explaining at least one embodiment in detail, it is to be understood that the embodiments are not limited in application to the details of construction and to the arrangements of the components set forth in the following description or illustrated in the drawings. Also, it is to be understood that the phraseology and terminology employed herein are for the purpose of description and should not be regarded as limiting.

Many further features and combinations thereof concerning embodiments described herein will appear to those skilled in the art following a reading of the instant disclosure.

### DESCRIPTION OF THE FIGURES

Embodiments will be described, by way of example only, with reference to the attached figures, wherein in the figures:
**FIG. 1** illustrates, in a component diagram, an example of an electronic identity verification architecture, in accordance with some embodiments.
**FIG. 2** illustrates, in a flowchart, an example of a method of transferring a secure cardholder identification, in accordance with some embodiments.
**FIG. 3** illustrates, in a component diagram, another example of an electronic identity verification system, in accordance with some embodiments.
**FIG. 4** illustrates, in a flowchart, an example of a method of verifying an electronic identity, in accordance with some embodiments.
**FIG. 5** illustrates, in a flowchart, another example of a method of verifying an electronic identity, in accordance with some embodiments.
**FIG. 6** illustrates, in a flowchart, another example of a method of verifying an electronic identity, in accordance with some embodiments.
**FIG. 7** illustrates, in a sequence diagram, another example of a method of transferring a secure cardholder identification, in accordance with some embodiments.
**FIG. 8** illustrates, in a flowchart, an example of a method of verifying an electronic identity, in accordance with some embodiments.
**FIG. 9** illustrates, in a component diagram, an example of a PoG architecture and typical dataflow.
**FIG. 10** illustrates, in a component diagram, another example of an electronic identity verification architecture and typical dataflow, in accordance with some embodiments.
**FIG. 11** illustrates, in a sequence diagram, another example of a method of verifying an electronic identity, in accordance with some embodiments.
**FIG. 12** illustrates, in a block schematic diagram, an example of a computing device, according to some embodiments.

It is understood that throughout the description and figures, like features are identified by like reference numerals.

### DETAILED DESCRIPTION

Embodiments of methods, systems, and apparatus are described through reference to the drawings.

The following discussion provides example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

Personal Identification Number (PIN) On Glass (PoG) specifications provided by Payment Card Industry (PCI), entitled "Payment Card Industry (PCI) Software-based PIN entry on COTS Security Requirements, Version 1.0" (herein the "PoG Specification") dated January 2018, as updated by PCI from time to time (hereby incorporated by reference), desire the removal of the need for a fully standalone, secure point of sale terminal (e.g., a handheld payment terminal) may be used to receive a cardholder's personal identification number (PIN) entry when making a purchase with a merchant. The specifications desire PIN entries to occur on off-the-shelf devices, such as commercial tablets, running PCI-compliant apps to receive the cardholder's PIN. While, the specifications provide an architecture and method for commercial devices to receive PINs from a merchant device, the specifications do not provide a method or architecture for receiving PINs from a trusted device.

Specifically, the current PIN On Glass specification does not provide a method or infrastructure for cardholders entering their personal PIN on their own devices (e.g., cardholder's tablet or phone). Cardholders may not trust or be comfortable entering personal information onto a device controlled by the merchant. The current PIN on Glass specification also does not provide ways for mitigating theft or damage of a merchant device. Merchants may not wish constant cardholder contact with expensive, delicate devices.

Embodiments disclosed herein describe a method by which the cardholder enters their PIN on a personal device, or any device they trust (e.g., a device belonging to a family member or a friend), rather than a device owned or controlled by the merchant, while maintaining a series of secure communications to protect PIN and cardholder data in order to facilitate a transaction.

Embodiments disclosed herein follows the PCI guidelines for PIN on Glass. However, they differ in that the cardholder enters their PIN on a device they trust (e.g., their own cell phone) -- not the merchant's device.

The following terminology is used herein:
COTS - Commercial Off-The-Shelf (e.g., a commercially available device)
POS - Point-Of-Sale
MPOS - Mobile POS (e.g., a MPOS application residing on a COTS device)
PIN - Personal Identification Number
PoG - PIN on Glass (also known as mobile device PIN entry)
SPEA - Software-based PIN Entry Application
PCI - Payment Card Industry
PTS - Payment Transition Security
E2E - End-To-End
SRED - Secure Reading and Exchange of Data (e.g., a PCI PTS module establishing E2E encryption)
SDK - Software Development Kit

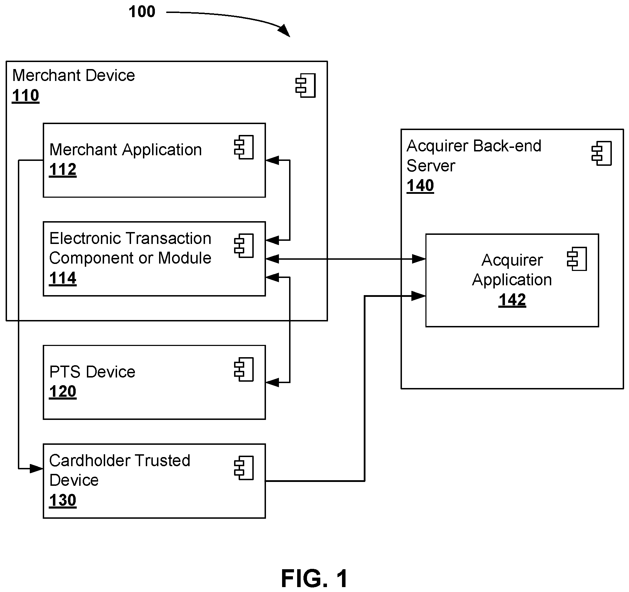

**FIG. 1** illustrates, in a component diagram, an example of an electronic identity verification architecture **100,** in accordance with some embodiments. The electronic identity verification architecture **100** includes a merchant device **110,** a PTS device **120,** a cardholder-trusted device **130** and an acquirer application **142** on a back-end server **140.** An acquirer may be a bank, other financial institution, payment processor or other authorized entity that processes payment cards on behalf of a merchant. The merchant device **110** may be a smart phone or tablet that includes a merchant point of sale application **112** and an electronic transaction component or module **114** that communicates, by wire or wirelessly, with the acquirer application **142** on the back-end server **140.** The term "electronic transaction component" may be used herein interchangeably with the term "electronic transaction module" (or "electronic transaction module or component"). In some embodiments, the electronic transaction module **114** may be a standalone application on the merchant device **110** that communicates with a merchant application **112,** PTS device **120** and the back-end server **140.** In other embodiments, the electronic transaction component **114** may be a software development kit (SDK) or library comprising code that is embedded into the merchant application **112.** The code allows the merchant application **112** to communicate with the PTS device **120** and the back-end server **140.** The merchant device **110** may also be paired with the PTS device **120** (i.e., paired, by wire or wirelessly, with a standalone chip card reader). Other components may be added to the electronic identity verification architecture **100.**

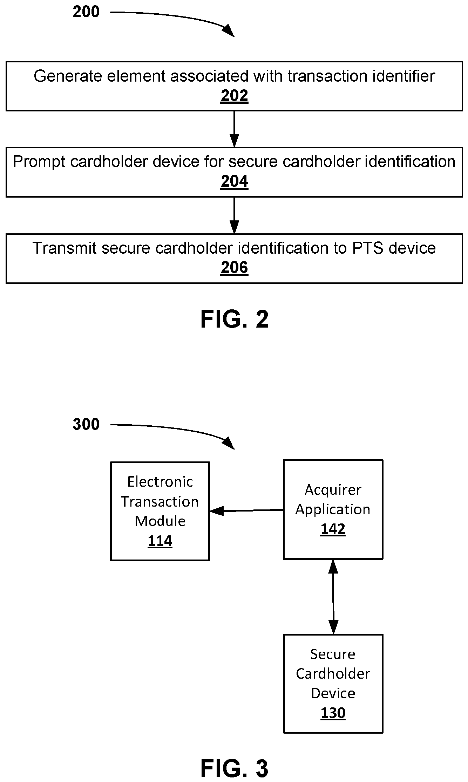

**FIG. 2** illustrates, in a flowchart, an example of a method of transferring a secure cardholder identification **200,** in accordance with some embodiments. Examples of secure cardholder identification include a PIN, and/or a biometric identifier (e.g., a finger print, retina scan, etc.). The method **200** may be performed by an acquirer application **142** running on the back-end server **140.** Alternatively, aspects of the method **200** may be performed on a third party server, such as validation of the received secure identification. The method **200** comprises generating **202** a transaction identifier (ID) to be displayed at a merchant device **110,** prompting **204** a cardholder device **130** for a secure cardholder identification, and transmitting **206** the secure cardholder identification to a PTS device **120.** In some embodiments, the secure cardholder identification is passed through the electronic transaction module **114** to the PTS device **120.** Other steps may be added to the method **200.** Some steps in the method **200** will be described in greater detail below.

**FIG. 3** illustrates, in a component diagram, another example of an electronic identity verification system **300,** in accordance with some embodiments. The electronic identity verification system **300** comprises the electronic transaction module **114,** the acquirer application **142** and the cardholder-trusted device **130.** As noted above, an acquirer may be a bank, other financial institution, payment processor or other authorized entity that processes payment cards on behalf of a merchant. The acquirer application **142** may be executed by at least one processor on an acquirer server in an acquirer system. The electronic transaction module **114** communicates with the acquirer application **142** and a PTS device **120** application. The electronic transaction module **114** may reside on a merchant device **110** and may be part of a merchant application **112** or separate from a merchant application **112.**

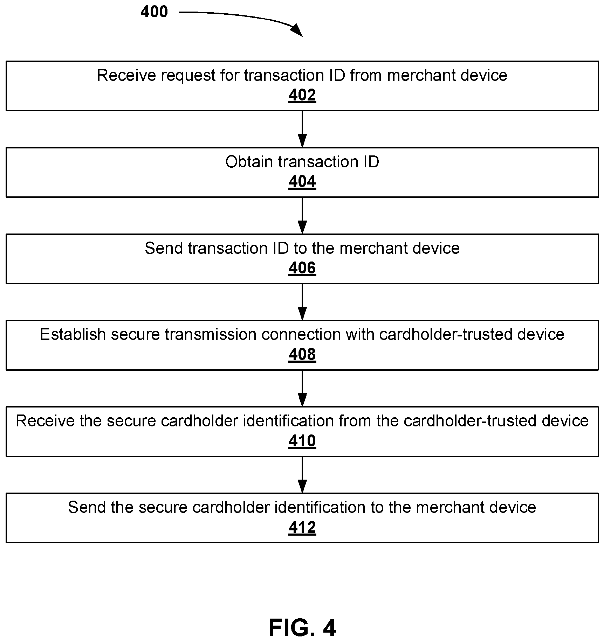

**FIG. 4** illustrates, in a flowchart, an example of a method of verifying an electronic identity **400,** in accordance with some embodiments. The method **400** may be performed by the acquirer application **142.** The acquirer back-end server **140** may comprise at least one processor configured to execute instructions, and a memory storing a sequence of instructions which, when executed by the at least one processor, carry out the method of verifying an electronic identity **400.** The method **400** comprises receiving **402,** from a merchant device, a request for a transaction identifier (ID) associated with a transaction between the merchant device and a cardholder-trusted device. A transaction ID is then obtained **404** at the acquirer application. In some embodiments, the transaction ID is generated at the acquirer application **142.** In other embodiments, the transaction ID is received from the merchant device **110.** Next, the acquirer application **142** sends **406** the transaction ID to the merchant device **110.** Next a secure connection is established **408** between the acquirer application **142** and the cardholder-trusted device **130.** The secure transmission connection is established in response to a cardholder-trusted device **130** receiving an element associated with the transaction ID. In some embodiments, the acquirer application **142** may send (e.g., transmit) to a cardholder-trusted device **130,** a request for a secure cardholder identification. Claimed embodiments of secure cardholder identification include a PIN, and/or a biometric identifier (e.g., a digital representation of a finger print, a digital representation of a retina scan, etc.). The acquirer application **142** will then receive **410,** from the cardholder-trusted device **130,** the secure cardholder identification. The acquirer application **142** then sends (e.g., transmit) **412,** to a merchant device **110** (e.g., to an electronic transaction module **114** in the merchant device), the secure cardholder identification. Other steps may be added to the method **400,** including associating the secure cardholder identification with a transaction identifier, as will be described in further detail below.

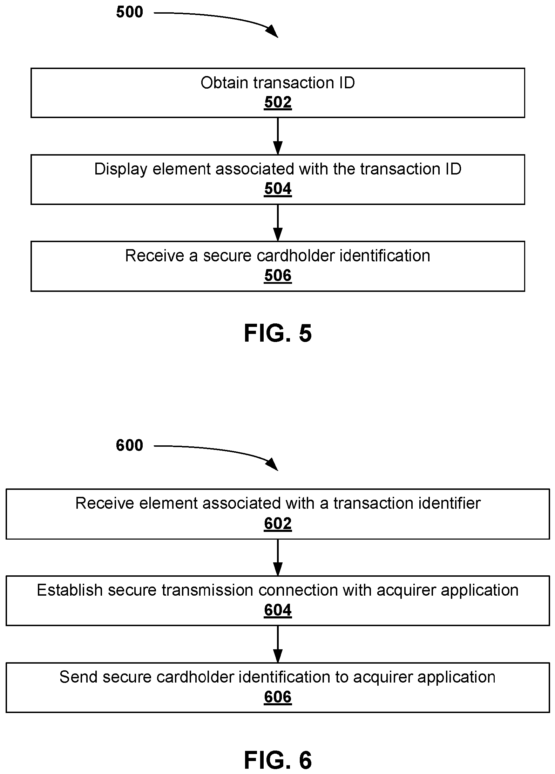

**FIG. 5** illustrates, in a flowchart, another example of a method of verifying an electronic identity **500,** in accordance with some embodiments. The method **500** may be performed by a merchant device **130.** The merchant device **110** may comprise at least one processor configured to execute instructions, and a memory storing a sequence of instructions which, when executed by the at least one processor, carry out the method of verifying an electronic identity **500.** The method **500** comprises obtaining **502** a transaction identifier (ID) for a transaction between the merchant device **110** and a cardholder-trusted device **130.** The transaction ID may be received from the acquirer application **142** or generated at the merchant device **110.** The merchant device **110** then displays **504** an element associated with the transaction ID. The element may be received from the acquirer application **142** or generated at the merchant device **110** by either the merchant application **112** or the electronic transaction component or module **114.** In some embodiments, the merchant application **112** controls the display **504** of the element, in other embodiments, the electronic transaction component or module **114** controls the display **504** of the element. Next, the merchant device receives **506** a secure cardholder identification from an acquirer application **142.** Other steps may be added to the method **500,** such as the merchant device sending (e.g., transmitting) the secure cardholder identification to a PTS device **120,** as will be described in further detail below.

**FIG. 6** illustrates, in a flowchart, another example of a method of verifying an electronic identity **600,** in accordance with some embodiments. The method **600** may be performed by a cardholder-trusted device **130.** The cardholder-trusted device **130** may comprise at least one processor configured to execute instructions, and a memory storing a sequence of instructions which, when executed by the at least one processor, carry out the method of verifying an electronic identity **600.** The method **600** comprises receiving **602** an element associated with a transaction ID. The transaction ID is associated, at an acquirer application **142,** with a transaction between the cardholder-trusted device **130** and the merchant device **110.** Next, the cardholder device **130** establishes **604** a secure transmission connection with the acquirer application **142** in response to receiving the element associated with the transaction ID. The cardholder device **130** then sends **606** the secure cardholder identification to the acquirer application **142.** Other steps may be added to the method **600,** such as the cardholder-trusted device **130** receiving from the acquirer application a request for a secure cardholder identification, and the cardholder-trusted device **130** receiving an input comprising the secure cardholder identification, as will be described in further detail below.

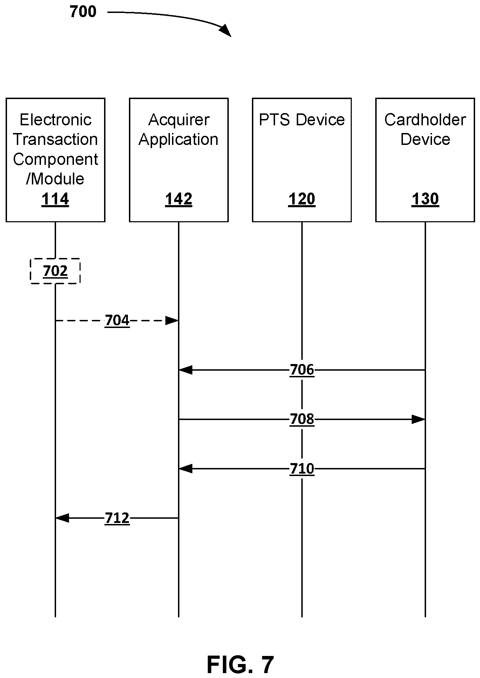

In some embodiments, the secure cardholder identification may be securely transmitted, such as via digital encryption. For example, a PIN or a digital representation of a biometric identifier may be encrypted using public/private key pairs. **FIG. 7** illustrates, in a sequence diagram, another example of a method of transferring a secure cardholder identification **700,** in accordance with some embodiments. The method **700** may be performed by an acquirer application **142** running on the back-end server **140.** Alternatively, aspects of the method **700** may be performed on a third party server, such as validation of the received secure identification. The method **700** comprises receiving **706** a transaction request from a cardholder device **130,** sending **708** the public key to the cardholder device **130,** receiving **710** a secure cardholder identification that is encrypted using the public key from the cardholder device **130,** and sending **712** the encrypted secure cardholder identification to the electronic transaction component or module **114.** It is noted that methods **200, 400, 500** and **600** may be modified to incorporate steps of method **700,** or used in conjunction with method **700.**

Other steps may be added to the method **700,** such as generating **702** a public/private key pair at the electronic transaction component or module **114,** and receiving **704** the public key and a transaction identifier from the electronic transaction component or module **114.** Alternatively, the private key may be generated at the back-end server **140,** and the secure cardholder identification unencrypted by the back-end server **140** and encrypted using pre-determined encryption means between the back-end server **140** to the electronic transaction component or module **114.** In another alternative embodiment, the PTS device **120** may obtain (receive or generate) a public/private key pair. The PTS device **120** may then send the public key to the electronic transaction component or module **114,** which then sends the public key to the back-end server **140.** The back-end server **140** may then send the public key to the consumer device **130** to encrypt the PIN.

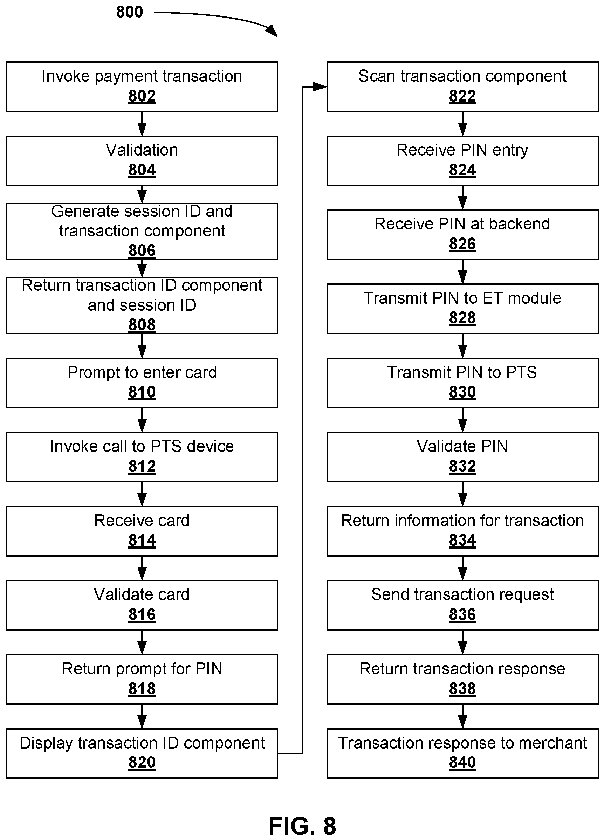

**FIG. 8** illustrates, in a flowchart, an example of a method of verifying an electronic identity **800,** in accordance with some embodiments. A merchant point of sale application **112** may invoke a payment transaction **802** to the electronic transaction component or module **114.** The electronic transaction component or module **114** may connect to an acquirer application **142** on the back-end server **140** to validate **804** the electronic transaction component or module **114** and merchant credentials. The validation request **804** may comprise requesting a transaction identifier (ID) for the payment transaction. The acquirer application **142** on the back-end server **140** may generate **806** a unique transaction ID component and a payment session identifier (ID) (i.e., specific to the requested transaction) to the electronic transaction component or module **114.** It should be understood that the session ID may be separate from the transaction ID, include the transaction ID, or be the transaction ID. In some embodiments, the unique transaction ID component may be a unique Quick Response (QR) code, be generated based on a QR code, or otherwise associated with a QR code. In some embodiments, the unique transaction ID component may be a URL link. In some embodiments, the unique transaction ID component may be transmitted to a memory location accessible by an application on a trusted cardholder device **130.** In some embodiments, the transaction ID component may be represented as a string of alphanumeric characters, or some other representation. In some embodiments, a QR code may be an example of a transaction ID, or an element associated with the transaction ID, that is generated **202** by the acquirer application **142** on the back-end server **140** as shown in the method **200** of **FIG. 2****.** In some embodiments, the QR code may be an example of an element, associated with the transaction ID, that is generated by the electronic transaction component or module **114,** or the merchant application **112,** on the merchant device **110.** In such embodiments, the transaction ID is received from the acquirer application **142** and the element generated by the electronic transaction component or module **114** is associated with the transaction ID. In some embodiments, the electronic transaction component or module **114** may also generate a public/private key pair described in **FIG. 7****.**

The electronic transaction (ET) component or module **114** may then return **808** the unique transaction ID component and payment session ID to the merchant application **112.** In some embodiments, the public key described in **FIG. 7** is sent to the back-end server **140.** The merchant application **112** or the electronic transaction component or module **114** may then prompt **810** a cardholder to enter a card (e.g., a debit or credit card). The electronic transaction component or module **114** may then invoke **812** a call to the PTS device **120.** It should be understood that in this step **812** there may be multiple messages (back and forth) between the PTS device **120** and the electronic transaction component or module **114** (e.g., device ready). Once the cardholder card is entered and read **814** by the PTS device **120,** the PTS device **120** may validate the card and return **816** a prompt for the PIN (or other secure cardholder identification) to the electronic transaction component or module **114.** The electronic transaction component or module **114** may then return **818** the prompt for the PIN (or other secure cardholder identification) to the merchant application **112.** The merchant device **110** then displays **820** the unique transaction ID component (e.g., QR code).

The cardholder may obtain (e.g., access/receive) **822** the unique transaction ID component (e.g., by scanning a QR code) using the trusted cardholder device **130.** In some embodiments where the unique transaction ID component is represented as a string of alphanumeric characters, a manual entry of the alphanumeric characters by a user on the device could perform the same function as a scan of a QR code. The unique transaction ID component may include information that causes the trusted cardholder device **130** to open a secure PIN (or other secure cardholder identification) entry display page served by the back-end server **140** in a browser or other application on the trusted cardholder device **130.** In some embodiments, the secure PIN entry display page may be an example of prompting **204** a cardholder device **120** for a secure cardholder identification as shown in the method of **FIG. 2****.** In some embodiments, the back-end server **140** may send the public key described in **FIG. 7** to the trusted cardholder device **130** in this step.

The cardholder may enter their PIN (or other secure cardholder identification) on the trusted cardholder device **130.** Once the trusted cardholder device **130** receives **824** the PIN (or other secure cardholder identification), the trusted cardholder device **130** sends **826** the PIN (or other secure cardholder identification) to an acquirer application **142** on the back-end server **140.** In some embodiments, the secure cardholder identification may be encrypted using the public key as described in **FIG. 7****.** The application on the back-end server **140** sends the PIN (or other secure cardholder identification) to the electronic transaction component or module **114** that then sends **830** the PIN (or other secure cardholder identification) to the PTS device **120.** In some embodiments, step **830** is an example of the transmitting **206** the PIN to a PTS device as shown in the method **200** of **FIG. 2****.** In some embodiments, the secure cardholder identification is sent encrypted using the public key to the electronic transaction component or module **114** that then decrypts the secure cardholder identification and sends it securely (e.g., encrypted using other means) to the PTS device **120**.

The cardholder PIN (or other secure cardholder identification) is then validated **832** by the card in the PTS device **120.** The PTS device **120** returns **834** card information used for the transaction (e.g., card number) to the electronic transaction component or module **114.** The electronic transaction component or module **114** sends **836** the transaction request to the application **142** on the back end server **140** for processing. The application **142** on the back-end server **140** returns **838** a transaction response message to the electronic transaction component or module **114** and cardholder device **130.** The electronic transaction component or module **114** returns **840** a transaction response to the merchant application **112.** Other steps may be added to the method **800**. Some steps in the method **800** will be further described below.

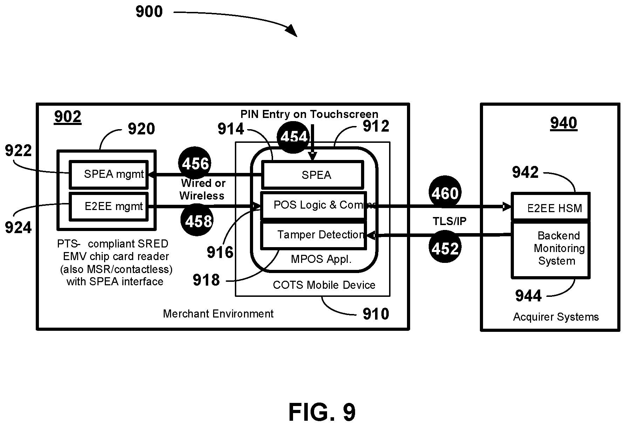

In some embodiments, PoG involves the entry of a cardholder's PIN by the cardholder during a chip card (e.g., a Europay, MasterCard^{™} and Visa^{™} (EMV) chip card) transaction on the screen of a COTS mobile smartphone or tablet. **FIG. 9** illustrates, in a component diagram, an example of a PoG architecture **900** and typical dataflow, in accordance with the PoG Specification. The PoG architecture **900** comprises a merchant environment **902** and an acquirer system **940.** The merchant environment **902** includes a PTS-compliant SRED EMV chip card reader **920** and a COTS mobile device **910.** In some embodiments not described in the PoG Specification, other types of chip card readers may be used rather than EMV. The chip card reader **920** includes a SPEA management interface **922** and an E2E encryption (E2EE) management module **924.** The COTS mobile device **910** includes an MPOS application **912** that includes a SPEA module **914,** a POS logic and communication module **516,** and a tamper detection module **918.** The acquirer system **940** includes an E2EE Hardware Security Module (HSM) **942** and a back-end monitoring system **944.**

In flow step **452,** a real-time "backend monitoring system" **944** at the acquirer system **940** may verify that there are no issues with the COTS tamper detection module **918** prior to displaying the PIN entry screen for an EMV transaction. In some embodiments, PoG is not used for swipe, contactless or key entry modes. In flow step **454,** the cardholder may use a COTS screen (e.g., tablet touchscreen) to enter their PIN into the SPEA module **914.** In flow step **456,** the SPEA module **914** may encrypt the PIN and send it to the PTS-compliant SRED card reader **920.** In flow step **458,** the PTS card reader **920** may decrypt the PIN. If the PIN is an EMV offline PIN, then the PTS card reader **920** may send the PIN to the EMV card for verification. If the PIN is an EMV online PIN, then the E2EE management module **924** may generate and send a Triple Data Encryption Standard (TDES) PIN block to the POS Logic and Communication module **916.** In some embodiments, an assumption may be made that only offline PINs are used for EMV. In flow step **460,** the MPOS application **912** may send the transaction message with E2EE data to the E2EE HSM in the acquirer system **940.** In embodiments not described in the PoG Specification, other steps may be performed, including the sending of error messages when validation fails.

A traditional personal electronic device (PED) relies on "static" security, for example, tamper detection may cause key erasure. In some embodiments, PoG PIN entry relies on "dynamic" security, especially the real-time acquirer tamper checking prior to the display of a PIN entry screen. In some embodiments, PoG may involve a traditional PTS PED for card read functions.

New and non-traditional security measures may be applied to protect the MPOS application in general, and the SPEA in particular (versus a traditional PED). In some embodiments, real-time tamper detection of the COTS device may be managed by the acquirer back-end system (e.g., acquirer back-end application **142,** acquirer system **140, 540**). Also, there may be reliance on code obfuscation ("scrambling") and multiple layers of credentials. Furthermore, "White box cryptography", which is a technique for obfuscating crypto algorithms, may be used.

It is noted that in PoG, the MPOS application may be updated relatively rapidly to fix flaws in comparison to a traditional "static" PED. It should be understood that PoG on COTS devices should not be confused with traditional PEDs using hardened PoG built from commercially available touchscreen smart phones and tablets.

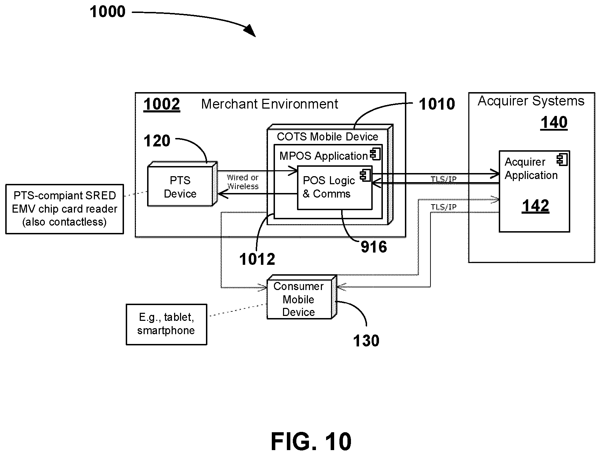

**FIG. 10** illustrates, in a component diagram, another example of an electronic identity verification architecture **1000** and typical dataflow, in accordance with some embodiments. The PoG Specification architecture **900** shown in **FIG. 9** could be amended accordingly to allow for trusted PIN verification as described herein. The electronic identity verification architecture **1000** comprises a merchant environment **1002** and an acquirer systems **140.** The merchant environment **1002** includes a PTS device **120** and a COTS mobile device **1010.** The PTS device **120** may be a PTS-compliant SRED EMV chip card reader, and in some embodiments may be contactless. The COTS mobile device **1010** includes an MPOS application **1012** that includes a POS logic and communication module **916.** The acquirer system **140** includes an acquirer application **142.** The environment **1000** also includes a cardholder device (e.g., consumer mobile device such as a tablet, smartphone, etc.) **130** that communicates with the merchant environment **1002** and the acquirer system **140.**

The PTS device **120** communicates via wired or wireless communication with the POS Logic and Comm unit **916.** The POS Logic and Comm unit **916** also communicates via transport layer security (TLS) / Internet protocol (IP) with the back-end system **140.** The back-end system **140** also communicates via TLS/IP with the cardholder device **130** to pass the secure cardholder identification to allow a cardholder to input their secure cardholder identification (e.g., PIN) on their own trusted device **130** rather than on the merchant's COTS mobile device **120.** The cardholder device **130** communicates with the COTS mobile device **1010** to receive the prompt for the secure cardholder identification.

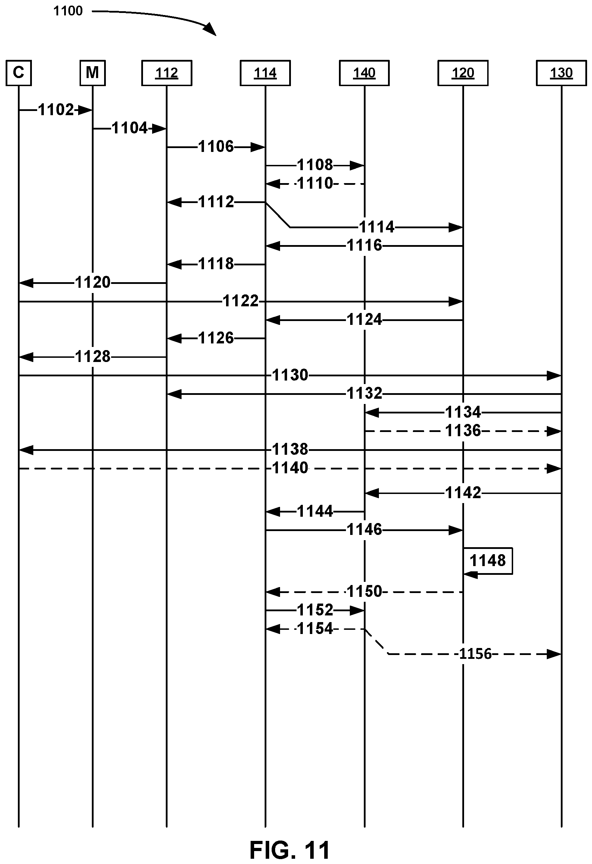

**FIG. 11** illustrates, in a sequence diagram, another example of a method of verifying an electronic identity **1100,** in accordance with some embodiments. A cardholder may wish to make an electronic purchase transaction at a merchant **1102.** The merchant may then initiate a purchase transaction **1104** at a merchant application **112.** The merchant application **112** may send (e.g., transmit) a payment transaction invocation message **1106** to an electronic transaction component or module **114.** The electronic transaction component or module **114** may send (e.g., transmit) an electronic transaction component or module and merchant credentials validation request message **708** to a back-end server **140** application **142.** In some embodiments, the electronic transaction component or module **114** may generate a public/private key pair and send the public key to the back-end server either before, during or after step **1108.** The back-end server **140** application **142** may then send (e.g., transmit) a validation response message **1110** to the electronic transaction component or module **114.** The validation response message may include a secure communication method code (e.g., a QR code associated with a transaction ID, other element associated with a transaction ID, or a transaction ID) and payment session ID associated with the purchase transaction. In some embodiments, a QR code or other element associated with the transaction ID may be generated and tied to the received secure communication method code. The electronic transaction component or module **114** may then send (e.g., transmit) the secure communication method code (e.g., a QR code) and payment session ID in a message **1112** to the merchant application **112.** The electronic transaction component or module **114** may then send (e.g., transmit) a transaction request message **1114** to a PTS device **120**. The PTS device **120** may then send (e.g., transmit) a PTS ready message **1116** to the electronic transaction component or module **114.** The electronic transaction component or module **114** may then send (e.g., transmit) a PTS ready message **1118** to the merchant application **112.** The merchant application **112** may then display an enter card prompt **1120** on the merchant device **110.**

The PTS device **120** may then receive card information **1122** when a card is entered into the PTS device **120.** The PTS device **120** may then send (e.g., transmit) a card validation and secure cardholder identification (e.g., a PIN) prompt message **1124** to the electronic transaction component or module **114.** The electronic transaction component or module **114** may then send (e.g., transmit) a secure cardholder identification (e.g., PIN) prompt message **1136** to the merchant application **112.** The merchant application **112** may then display the secure communication method code (e.g., a QR code) **1128** on the merchant device **110.**

The trusted cardholder device (e.g., the cardholder device **130**) may then be prompted to open a scanner associated with the secure communication code (i.e., a QR scanner) **1130** installed on the cardholder device **130.** The cardholder device **130** may then scan the secure communication method code (e.g., a QR code) **1132** displayed by the merchant application **112.** As noted above, in some embodiments, the scanning may be replaced with other means of inputting a representation of the secure communication code to the cardholder device. The secure communication method code (e.g., a QR code) may cause the cardholder device **130** to send an open uniform resource locator (URL) message **1134** to the back-end server **140** application **142.** This message **1134** may be sent via a secure cardholder identification (e.g., PIN) entry display page served by the back-end server **140** in a browser or other application on the trusted cardholder device **130.** The back-end server **140** application **142** may then send an open URL response message **1136** to the cardholder device **130.** The message **1136** may include a prompt for a secure cardholder identification (e.g., PIN). The message **1136** may also include the public key. The cardholder device **130** may then display the ender secure cardholder identification (e.g., PIN) prompt **1138.**

When the cardholder device **130** receives a secure cardholder identification (e.g., PIN) input **1140,** the cardholder device **130** may send (e.g., transmit) a validation request message **1142** to the back-end server **140** application **142.** The validation request message **1142** may include the secure cardholder identification (e.g., PIN). In some embodiments, the public key is used to encrypt a digital representation of the secure cardholder identification before sending it to the back-end server **140** application **142.** The back-end server **140** application **142** may then send (e.g., transmit) a validation request message **1144** to the electronic transaction component or module **114.** The electronic transaction component or module **114** may then send (e.g., transmit) a validation request message **1146** to the PTS device **120.** The message **1146** may include the secure cardholder identification (e.g., PIN). In some embodiments, a digital representation of the secure cardholder identification that was encrypted using the public key may be decrypted using the corresponding private key generated by the electronic transaction component or module **114.** The electronic transaction component or module **114** may transmit the secure cardholder identification (e.g., PIN) to the PTD device **120** in a secure manner. The PTS device **120** may then validate **1148** the secure cardholder identification (e.g., PIN). Once validated, the PTS device may then send a validation response message **1150** to the electronic transaction component or module **114.** The response message **1150** may include the secure cardholder identification (e.g., PIN), a primary account number (PAN), any other device information required to complete a transaction authorization, and/or a verification confirmation indication. The electronic transaction component or module **114** may then send (e.g., transmit) a transaction authorization request message **1152** to the back-end server **140** application **142.** The back-end server **140** application **142** may then send (e.g., transmit) a transaction response message **1154** to the electronic transaction component or module **114,** and a transaction response message **1156** to the cardholder device **130.** The electronic transaction component or module **114** may then send (e.g., transmit) a transaction response message to the merchant application **112** which, in turn, may display the transaction response **760** on the merchant device **110**. Other steps may be added to the method **1100,** including various action relating to purchase transaction that are not related to identity verification.

The electronic identity verification system and methods described above relate to the confidential and secure transfer of a secure cardholder identification (e.g., PIN) for a card on a trusted cardholder device **130.** However, the system and methods described above may be amended to relate to the confidential and secure transfer of any payment scheme in place of the card and/or secure cardholder identification (e.g., PIN).

The electronic identity verification system and methods use the unique transaction identification (ID) generated by an electronic identity verification system for the transaction to be connected/communicated to the cardholder. The above embodiment provides an example using a generation of a QR code tied to the transaction ID, which the cardholder scans on their personal device to open a URL tied to the transaction ID.

In alternative embodiments, the QR code could be replaced with other communication. For example, a merchant may request the cardholder's cell phone number and that is used to generate an SMS message that includes the URL, directing the cardholder to tie in to the unique transaction ID that way.

It is understood that while a URL in a browser is common and convenient, there could be other means. The use of a URL may be generalized to any secure two-way form of computerized communication between the cardholder and the back-end server **140.**

The entry of a secure cardholder identification (e.g., PIN) may be generalized to any identity verification by the cardholder, such as, for example, biometrics.

In some embodiments, neither QR code nor URL is used, but instead the unique transaction identity is tied to the cardholder via an account-based consumer application. For example, 1) a merchant initiates the transaction and a back-end server **140** creates a unique transaction ID (as above); 2) a cardholder has a standalone trusted application on his/her own device, and logs into their account; 3) via accessing their account, the cardholder receives access equivalent to the information in the URL link to enter their secure cardholder identification (e.g., PIN/biometrics), and the remaining steps proceed as in the above embodiment.

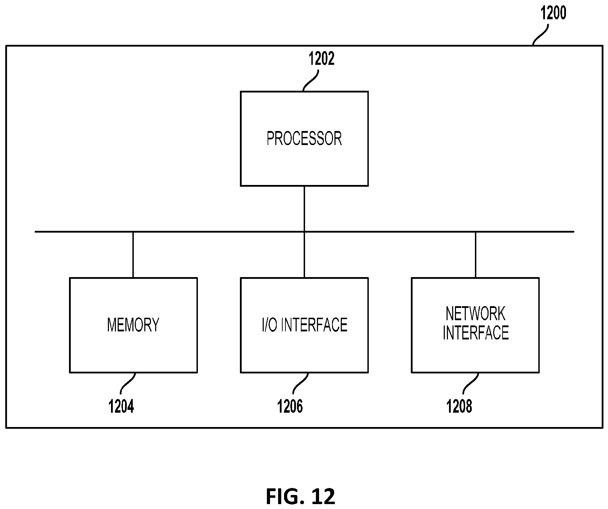

**FIG. 12** illustrates, in a block schematic diagram, an example of a computing device **1200,** according to some embodiments. There is provided a schematic diagram of computing device **1200,** exemplary of an embodiment. As depicted, computing device **1200** includes at least one processor **1202,** memory **1204,** at least one I/O interface **1206,** and at least one network interface **1208.**

Each processor **1202** may be a microprocessor or microcontroller, a digital signal processing (DSP) processor, an integrated circuit, a field programmable gate array (FPGA), a reconfigurable processor, a programmable read-only memory (PROM), or any combination thereof.

Memory **1204** may include a computer memory that is located either internally or externally such as, for example, random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM).

Each I/O interface **1206** enables computing device **1200** to interconnect with one or more input devices, such as a keyboard, mouse, camera, touch screen and a microphone, or with one or more output devices such as a display screen and a speaker. I/O interface **1206** may also include application programming interfaces (APIs) which are configured to receive data sets in the form of information signals, including verbal communications recorded and digitized, and/or text input from users in response to queries posed to said users.

Each network interface **1208** enables computing device **1200** to communicate with other components, to exchange data with other components, to access and connect to network resources, to serve applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g., Wi-Fi, WiMAX), SS7 signaling network, fixed line, local area network, wide area network, and others. Network interface **1208,** for example, may be used to communicate audio files (e.g., MP3, WAV, etc.) containing recorded verbal responses from a trusted cardholder device to the system for processing via a speech-to-text engine.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the foregoing discussion, numerous references will be made regarding servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements.

Although the embodiments have been described in detail, it should be understood that various changes, substitutions and alterations can be made herein.

Moreover, the scope of the present application is not intended to be limited to the particular embodiments of the process, machine, manufacture, composition of matter, means, methods and steps described in the specification.

As can be understood, the examples described above and illustrated are intended to be exemplary only.

## Claims

1. An electronic identity verification system comprising:
at least one merchant device processor configured to execute instructions;
at least one merchant device memory storing a sequence of instructions which, when executed by the at least one processor, perform a method (200, 500, 400, 700) of verifying an electronic identity;
wherein said at least one merchant device processor is configured to:
send, to an acquirer application system (142), a request for a transaction identifier (ID) for a transaction between the merchant device (110) and a cardholder-trusted device (130);
obtain, from the acquirer application system (142), the transaction ID;
(504) display, at the merchant device (110), an element associated with the transaction identifier ID; and
receive, from the acquirer application system (142), a secure cardholder identification;
wherein the at least one merchant device processor is further configured to: receive the element associated with the transaction ID from the acquirer application (142);
at least one acquirer application system processor configured to execute instructions;
at least one acquirer application system memory storing a sequence of instructions which, when executed by the at least one processor, perform a method (200, 500, 400, 700) of verifying an electronic identity;
wherein said at least one acquirer application system processor is configured to:
(402) receive, from the merchant device (110), a request for a transaction identifier (ID) for a transaction between the merchant device (110) and a cardholder- trusted device (130);
(404) obtain the transaction ID, wherein the transaction ID is generated at the acquirer application (142) or the transaction ID is received from the merchant device (110);
(406) send, to the merchant device (110), the transaction ID;
generate the element associated with the transaction ID, and send, to the merchant device (110), the element associated with the transaction ID, (408) wherein the cardholder-trusted device (130) establishes a secure transmission connection between the cardholder-trusted device (130) and the acquirer application (142) in response to receiving the element associated with the transaction ID, wherein the secure cardholder identification include a PIN and/or a biometric identifier;
(410) receive, from the cardholder-trusted device (130), the secure cardholder identification; and
(412) send, to the merchant device (110), the secure cardholder identification and
at least one cardholder-trusted device processor configured to execute instructions;
at least one cardholder-trusted device memory storing a sequence of instructions which, when executed by the at least one processor, perform a method of verifying an electronic identity;
wherein said at least one cardholder-trusted device processor is configured to:
receive the element associated with the transaction ID; and
send, to the acquirer application system (142), the secure cardholder identification.

2. The electronic identity verification system as claimed in claim 1, wherein to obtain (404) the transaction ID:
the at least one acquirer application system processor is further configured to:
generate the transaction ID; and
the at least one merchant device processor is further configured to:
send, to the acquirer application system (142), the transaction ID to be associated with the transaction between the merchant device (110) and the cardholder-trusted device (130);
receive, from the acquirer application system (142), confirmation that the transaction ID is associated with the transaction between the merchant device (110) and the cardholder-trusted device (130).

3. The electronic identity verification system as claimed in claim 1, wherein to obtain (404) the transaction ID, the at least one acquirer application system processor is further configured to:
receive, from the merchant device (110), the transaction ID to be associated with the transaction between the merchant device (110) and the cardholder-trusted device (130);
associate the transaction ID to the transaction between the merchant device (110) and the cardholder-trusted device (130); and
send, to the merchant device (110), confirmation that the transaction ID is associated with the transaction between the merchant device (110) and the cardholder-trusted device (130).

4. The electronic identity verification system as claimed in claim 1, wherein:
the at least one acquirer application system processor is further configured to:
obtain a public key; and
(708) send, to the cardholder-trusted device (130), the public key; and the at least one cardholder-trusted device processor is further configured to:
receive, from the acquirer application system (142), the public key; and
prior to sending the secure cardholder identification to the acquirer application system (142), encrypt the secure cardholder identification with the public key,
wherein to obtain the public key, the at least one acquirer application system processor is further configured to one of:
(704) receive, from the merchant device (110), the public key; or generate the public key.

5. The electronic identity verification system as claimed in claim 1, wherein:
the at least one merchant device processor is further configured to:
send, to the acquirer application (142), a public key;
the at least one acquirer application system processor is further configured to:
receive, from the merchant device (110), a public key; and
(708) send, to the cardholder-trusted device (130), the public key; and the at least one cardholder-trusted device processor is further configured to:
receive, from the acquirer application (142), a public key; and
prior to sending the secure cardholder identification to the acquirer application, encrypt the secure cardholder identification with the public key.

6. A method (200, 400, 500, 700) of verifying an electronic identity, the method comprising:
sending, from a merchant device (110) to an acquirer application (142), a request for a transaction identifier (ID) for a transaction between the merchant device (110) and a cardholder-trusted device (130);
(404) obtaining, at the acquirer application (142), the transaction ID, wherein the transaction ID is generated at the acquirer application (142) or the transaction ID is received from the merchant device (110);
receiving, at the merchant device (1 1 0) from the acquirer application (142), the transaction ID;
generating at the acquirer application (142) an element associated with the transaction ID, and sending, to the merchant device (110), the element associated with the transaction ID;
receiving, at the merchant device (110) from the acquirer application (142) the element associated with the transaction ID;
(504) displaying, at the merchant device (110), the element associated with the transaction identifier ID;
receiving, at the cardholder-trusted device (130), the element associated with the transaction ID;
(408) the cardholder-trusted device (130) establishing a secure transmission connection between the cardholder-trusted device (1 30) and the acquirer application (14 2) in response to receiving the element associated with the transaction ID;
(410) receiving, at the acquirer application (142) from the cardholder-trusted device (130), a secure cardholder identification, wherein the secure cardholder identification includes a PIN and/or a biometric identifier;
(412) the acquirer application (142) sending to the merchant device (110) the secure cardholder identification; and
receiving, at the merchant device (110) from the acquirer application (142), the secure cardholder identification.

7. The method as claimed in claim 6, wherein obtaining the transaction ID comprises:
sending, from the merchant device to the acquirer application, a request for the transaction ID;
generating, at the acquirer application, the transaction ID; and
receiving, at the merchant device from the acquirer application, the transaction ID.

8. The method as claimed in claim 6, wherein obtaining the transaction ID comprises:
sending, from the merchant device to the acquirer application, the transaction ID to be associated with the transaction between the merchant device and the cardholder-trusted device;
associating, at the acquirer application, the transaction ID to the transaction between the merchant device and the cardholder-trusted device; and
receiving, at the merchant device from the acquirer application, confirmation that the transaction ID is associated with the transaction between the merchant device and the cardholder-trusted device.

9. The method as claimed in claim 6, further comprising: obtaining, at the acquirer application, a public key;
sending, from the acquirer application to the cardholder-trusted device, the public key; and
prior to the cardholder-trusted device sending the secure cardholder identification to the acquirer application, encrypting, at the cardholder-trusted device, the secure cardholder identification with the public key,
wherein obtaining the public key comprises one of:
receiving, from the merchant device at the acquirer application, the public key; or generating, at the acquirer application, the public key.

10. The method as claimed in claim 6, further comprising:
sending, from the merchant device to the acquirer application, a public key; sending, from the acquirer application to the cardholder-trusted device, the public key; and
prior to the cardholder-trusted device sending the secure cardholder identification to the acquirer application, encrypting, at the cardholder-trusted device, the secure cardholder identification with the public key.

## Patentansprüche

1. Verifikationssystem für Elektronische Identitäten, umfassend:
mindestens einen Prozessor eines Händlergeräts, der zum Ausführen von Anweisungen eingerichtet ist;
mindestens einen Speicher eines Händlergeräts, der eine Sequenz von Anweisungen speichert, die wenn sie von dem mindestens einen Prozessor ausgeführt werden, ein Verfahren (200, 500, 400, 700) zum Verifizieren einer elektronischen Identität durchführen;
wobei der mindestens eine Prozessor des Händlergeräts eingerichtet ist zum:
Senden einer Anforderung für eine Transaktions-ID an ein Erwerberanwendungssystem (142) für eine Transaktion zwischen dem Händlergerät (110) und einem vertrauenswürdigen Gerät des Karteninhabers (130);
Erhalten der Transaktions-ID von dem Erwerberanwendungssystem (142);
(504) Anzeigen eines mit der Transaktions-ID assoziierten Elements an dem Händlergerät (110); und
Empfangen einer sicheren Karteninhaberidentifikation von dem Erwerberanwendungssystem (142);
wobei der mindestens eine Prozessor des Händlergeräts eingerichtet ist zum: Empfangen des mit der Transaktions-ID assoziierten Elements von der Erwerberanwendung (142);
mindestens einen Prozessor des Erwerberanwendungssystems, der zum Ausführen von Anweisungen eingerichtet ist;
wobei der mindestens eine Prozessor des Erwerberanwendungssystems eingerichtet ist zum:
(402) Empfangen einer Anforderung für eine Transaktions-ID von dem Händlergerät (110) für eine Transaktion zwischen dem Händlergerät (110) und einem vertrauenswürdigen Gerät des Karteninhabers (130);
(404) Erhalten der Transaktions-ID, wobei die Transaktions-ID in der Erwerberanwendung (142) erzeugt wird oder die Transaktions-ID von dem Händlergerät (110) empfangen wird;
(406) Senden der Transaktions-ID an das Händlergerät (110) ;
Erzeugen des mit der Transaktions-ID assoziierten Elements und Senden des mit der Transaktions-ID assoziierten Elements an das Händlergerät (110), (408) wobei das vertrauenswürdige Gerät des Karteninhabers (130) eine sichere Übertragungsverbindung zwischen dem vertrauenswürdigen Gerät des Karteninhabers (130) und der Erwerberanwendung (142) als Reaktion auf den Empfang des mit der Transaktions-ID assoziierten Elements herstellt, wobei die sichere Karteninhaberidentifikation eine PIN und/oder eine biometrische Kennung beinhaltet;
(410) Empfangen der sicheren Karteninhaberidentifikation von dem vertrauenswürdigen Gerät des Karteninhabers (130); und
(412) Senden der sicheren Karteninhaberidentifikation an das Händlergerät (110; und
mindestens einen Prozessor des vertrauenswürdigen Geräts des Karteninhabers, der zum Ausführen von Anweisungen eingerichtet ist;
mindestens einen Speicher des vertrauenswürdigen Geräts des Karteninhabers, der eine Sequenz von Anweisungen speichert, die wenn sie durch den mindestens einen Prozessor ausgeführt werden, ein Verfahren zum Verifizieren einer elektronischen Identität durchführen; wobei der mindestens eine Prozessor des vertrauenswürdigen Geräts des Karteninhabers eingerichtet ist zum:
Empfangen des mit der Transaktions-ID assoziierten Elements; und
Senden der sicheren Karteninhaberidentifikation an das Erwerberanwendungssystem (142).

2. Verifikationssystem für Elektronische Identitäten nach Anspruch 1, wobei zwecks Erhalten (404) der Transaktions-ID:
der mindestens eine Prozessor des Erwerberanwendungssystems ferner eingerichtet ist zum:
Erzeugen der Transaktions-ID; und
der mindestens eine Prozessor des Händlergeräts ferner eingerichtet ist zum:
Senden der Transaktions-ID an das Erwerberanwendungssystem, welche mit der Transaktion zwischen dem Händlergerät (110) und dem vertrauenswürdigen Gerät des Karteninhabers (130) assoziiert werden soll (142);
Empfangen einer Bestätigung von dem Erwerberanwendungssystem (142), dass die Transaktions-ID mit der Transaktion zwischen dem Händlergerät (110) und dem vertrauenswürdigen Gerät des Karteninhabers (130) assoziiert ist.

3. Verifikationssystem für Elektronische Identitäten nach Anspruch 1, wobei, zum Erhalt (404) der Transaktions-ID, der mindestens eine Prozessor des Erwerberanwendungssystems ferner eingerichtet ist zum:
Empfangen der Transaktions-ID von dem Händlergerät (110), welche mit der Transaktion zwischen dem Händlergerät (110) und dem vertrauenswürdigen Gerät des Karteninhabers (130) assoziiert werden soll;
Assoziieren der Transaktions-ID mit der Transaktion zwischen dem Händlergerät (110) und dem vertrauenswürdigen Gerät des Karteninhabers (130); und
Senden einer Bestätigung an das Händlergerät (110), dass die Transaktions-ID mit der Transaktion zwischen dem Händlergerät (110) und dem vertrauenswürdigen Gerät des Karteninhabers (130) assoziiert ist.

4. Verifikationssystem für Elektronische Identitäten nach Anspruch 1, wobei:
der mindestens eine Prozessor des Erwerberanwendungssystems ferner eingerichtet ist zum:
Erhalten eines öffentlichen Schlüssels; und
(708) Senden des öffentlichen Schüssels an das vertrauenswürdige Gerät des Karteninhabers (130); und wobei der mindestens eine Prozessor des vertrauenswürdigen Geräts des Karteninhabers ferner eingerichtet ist zum:
Empfangen des öffentlichen Schlüssels von dem Erwerberanwendungssystem (142); und
Verschlüsseln der sicheren Karteninhaberidentifikation mit dem öffentlichen Schlüssel bevor die sichere Karteninhaberidentifikation an das Erwerberanwendungssystem gesendet wird (142),
wobei zum Erhalten des öffentlichen Schlüssels der mindestens eine Prozessor des Erwerberanwendungssystems ferner eingerichtet ist zu einem der Folgenden:
(704) Empfangen des öffentlichen Schlüssels von dem Händlergerät (110; oder Erzeugen des öffentlichen Schlüssels.

5. Verifikationssystem für Elektronische Identitäten nach Anspruch 1, wobei:
der mindestens eine Prozessor eines Händlergeräts ferner eingerichtet ist zum:
Senden eines öffentlichen Schlüssels an die Erwerberanwendung (142);
der mindestens eine Prozessor des Erwerberanwendungssystems ferner eingerichtet ist zum:
Empfangen eines öffentlichen Schlüssels von dem Händlergerät (110); und
(708) Senden des öffentlichen Schüssels an das vertrauenswürdige Gerät des Karteninhabers(130); und der mindestens eine Prozessor des vertrauenswürdigen Geräts des Karteninhabers ferner eingerichtet ist zum:
Empfangen eines öffentlichen Schlüssels von der Erwerberanwendung (142); und
Verschlüsseln der sicheren Karteninhaberidentifikation mit dem öffentlichen Schlüssel bevor die sichere Karteninhaberidentifikation an die Erwerberanwendung gesendet wird.

6. Verfahren (200, 400, 500, 700) zum Verifizieren einer elektronischen Identität, wobei das Verfahren Folgendes umfasst:
Senden einer Anforderung für eine Transaktions-ID von einem Händlergerät (110) an eine Erwerberanwendung (142) für eine Transaktion zwischen dem Händlergerät (110) und einem vertrauenswürdigen Gerät des Karteninhabers (130);
(404) Erhalten der Transaktions-ID an der Erwerberanwendung (142), wobei die Transaktions-ID in der Erwerberanwendung (142) erzeugt wird oder die Transaktions-ID von dem Händlergerät (110) empfangen wird;
Empfangen der Transaktions-ID von der Erwerberanwendung (142) an dem Händlergerät (110);
Erzeugen eines mit der Transaktions-ID assoziierten Elements an der Erwerberanwendung (142) und Senden des mit der Transaktions-ID assoziierten Elements an das Händlergerät (110);
Empfangen des mit der Transaktions-ID assoziierten Elements von der Erwerberanwendung (142) an dem Händlergerät (110);
(504) Anzeigen des mit der Transaktions-ID assoziierten Elements an dem Händlergerät (110);
Empfangen des mit der Transaktions-ID assoziierten Elements an dem vertrauenswürdigen Gerät des Karteninhabers (130);
(408) wobei das vertrauenswürdige Gerät des Karteninhabers (130) eine sichere Übertragungsverbindung zwischen dem vertrauenswürdigen Gerät des Karteninhabers (130) und der Erwerberanwendung (142) als Reaktion auf den Empfang des mit der Transaktions-ID assoziierten Elements herstellt;
(410) Empfangen einer sicheren Karteninhaberidentifikation von dem vertrauenswürdigen Gerät (130) des Karteninhabers an der Erwerberanwendung (142), wobei die sichere Karteninhaberidentifikation eine PIN und/oder eine biometrische Kennung beinhaltet;
(412) wobei die Erwerberanwendung (142) die sichere Karteninhaberidentifikation an das Händlergerät (110) sendet; und
Empfangen der sicheren Karteninhaberidentifikation von der Erwerberanwendung (142) an dem Händlergerät (110) .

7. Verfahren nach Anspruch 6, wobei der Erhalt der Transaktions-ID Folgendes umfasst:
Senden einer Anforderung für die Transaktions-ID von dem Händlergerät an die Erwerberanwendung;
Erzeugen der Transaktions-ID an der Erwerberanwendung; und
Empfangen der Transaktions-ID von der Erwerberanwendung an dem Händlergerät.

8. Verfahren nach Anspruch 6, wobei das Erhalten der Transaktions-ID Folgendes umfasst:
Senden der Transaktions-ID von dem Händlergerät an die Erwerberanwendung, welche mit der Transaktion zwischen dem Händlergerät und dem vertrauenswürdigen Gerät des Karteninhabers assoziiert werden soll;
Assoziieren der Transaktions-ID an der Erwerberanwendung mit der Transaktion zwischen dem Händlergerät und dem vertrauenswürdigen Gerät des Karteninhabers; und
Empfangen einer Bestätigung von der Erwerberanwendung an dem Händlergerät, dass die Transaktions-ID mit der Transaktion zwischen dem Händlergerät und dem vertrauenswürdigen Gerät des Karteninhabers assoziiert ist.

9. Verfahren nach Anspruch 6, ferner umfassend:
Erhalten eines öffentlichen Schlüssels an der Erwerberanwendung;
Senden des öffentlichen Schlüssels von der Erwerberanwendung an das vertrauenswürdige Gerät des Karteninhabers; und
Verschlüsseln der sicheren Karteninhaberidentifikation an dem vertrauenswürdigen Gerät des Karteninhabers mit dem öffentlichen Schlüssel bevor das vertrauenswürdige Gerät des Karteninhabers die sichere Karteninhaberidentifikation an die Erwerberanwendung sendet,
wobei das Erhalten des öffentlichen Schlüssels eines der Folgenden umfasst:
Empfangen des öffentlichen Schlüssels von dem Händlergerät an der Erwerberanwendung; oder
Erzeugen des öffentlichen Schlüssels an der Erwerberanwendung.

10. Verfahren nach Anspruch 6, ferner umfassend:
Senden eines öffentlichen Schlüssels von dem Händlergerät an die Erwerberanwendung;
Senden des öffentlichen Schlüssels von der Erwerberanwendung an das vertrauenswürdige Gerät des Karteninhabers; und
Verschlüsseln der sicheren Karteninhaberidentifikation an dem vertrauenswürdigen Gerät des Karteninhabers mit dem öffentlichen Schlüssel bevor das vertrauenswürdige Gerät des Karteninhabers die sichere Karteninhaberidentifikation an die Erwerberanwendung sendet.

## Revendications

1. Système de vérification d'identité électronique comprenant:
au moins un processeur de dispositif de commerçant configuré pour exécuter des instructions;
au moins une mémoire de dispositif de commerçant qui stocke une séquence d'instructions qui, lorsqu'elles sont exécutées par l'au moins un processeur, réalisent un procédé (200, 500, 400, 700) de vérification d'une identité électronique;
dans lequel ledit au moins un processeur de dispositif de commerçant est configuré pour:
envoyer, sur un système d'application d'acheteur (142), une demande d'un identifiant (ID) de transaction pour une transaction entre le dispositif de commerçant (110) et un dispositif de confiance du titulaire de carte (130);
obtenir, depuis le système d'application d'acheteur (142), l'ID de transaction;
(504) afficher, au niveau du dispositif de commerçant (110, un élément associé à l'identifiant (ID) de transaction; et
recevoir, depuis le système d'application d'acheteur (142), une identification de détenteur de carte sécurisé;
dans lequel l'au moins un processeur de dispositif de commerçant est en outre configuré pour:
recevoir l'élément associé à l'ID de transaction depuis le système d'application d'acheteur (142) ;
au moins un processeur de système d'application d'acheteur configuré pour exécuter des instructions;
au moins une mémoire de système d'application d'acheteur qui stocke une séquence d'instructions qui, lorsqu'elles sont exécutées par l'au moins un processeur, réalisent un procédé (200, 500, 400, 700) de vérification d'une identité électronique;
dans lequel ledit au moins un processeur de système d'application d'acheteur est configuré pour:
(402) recevoir, depuis le dispositif de commerçant (110), une demande d'un identifiant (ID) de transaction pour une transaction entre le dispositif de commerçant (110) et un dispositif de confiance du titulaire de carte (130);
(404) obtenir l'ID de transaction, dans lequel l'ID de transaction est généré au niveau du système d'application d'acheteur (142) ou l'ID de transaction est reçu depuis le dispositif de commerçant (110);
(406) envoyer, sur le dispositif de commerçant (110), l'ID de transaction;
générer l'élément associé à l'ID de transaction, et envoyer, sur le dispositif de commerçant (110), l'élément associé à l'ID de transaction, (408) dans lequel le dispositif de confiance du titulaire de carte (130) établit une connexion de transmission sécurisée entre le dispositif de confiance du titulaire de carte (130) et le système d'application d'acheteur (142) en réponse à la réception de l'élément associé à l'ID de transaction, dans lequel l'identification de détenteur de carte sécurisé inclut un PIN et/ou un identifiant biométrique;
(410) recevoir, depuis le dispositif de confiance du titulaire de carte (130), l'identification de détenteur de carte sécurisé; et
(412) envoyer, sur le dispositif de commerçant (110), l'identification de détenteur de carte sécurisé; et
au moins un processeur de dispositif de confiance du titulaire de carte configuré pour exécuter des instructions;
au moins une mémoire de dispositif de confiance du titulaire de carte qui stocke une séquence d'instructions qui, lorsqu'elles sont exécutées par l'au moins un processeur, réalisent un procédé de vérification d'une identité électronique;
dans lequel ledit au moins un processeur de dispositif de confiance du titulaire de carte est configuré pour:
recevoir l'élément associé à l'ID de transaction; et
envoyer, sur le système d'application d'acheteur (142), l'identification de détenteur de carte sécurisé.

2. Système de vérification d'identité électronique tel que revendiqué selon la revendication 1, dans lequel, pour obtenir (404) l'ID de transaction:
l'au moins un processeur de système d'application d'acheteur est en outre configuré pour:
générer l'ID de transaction; et
l'au moins un processeur de dispositif de commerçant est en outre configuré pour:
envoyer, sur le système d'application d'acheteur (142), l'ID de transaction à associer à la transaction entre le dispositif de commerçant (110) et le dispositif de confiance du titulaire de carte (130);
recevoir, depuis le système d'application d'acheteur (142), une confirmation du fait que l'ID de transaction est associé à la transaction entre le dispositif de commerçant (110) et le dispositif de confiance du titulaire de carte (130).

3. Système de vérification d'identité électronique tel que revendiqué selon la revendication 1, dans lequel, pour obtenir (404) l'ID de transaction, l'au moins un processeur de système d'application d'acheteur est en outre configuré pour:
recevoir, depuis le dispositif de commerçant (110), l'ID de transaction à associer à la transaction entre le dispositif de commerçant (110) et le dispositif de confiance du titulaire de carte (130);
associer l'ID de transaction à la transaction entre le dispositif de commerçant (110) et le dispositif à de confiance du titulaire de carte (130); et
envoyer, sur le dispositif de commerçant (110), une confirmation du fait que l'ID de transaction est associé à la transaction entre le dispositif de commerçant (110) et le dispositif de confiance du titulaire de carte (130) .

4. Système de vérification d'identité électronique tel que revendiqué selon la revendication 1, dans lequel:
l'au moins un processeur de système d'application d'acheteur est en outre configuré pour:
obtenir une clé publique; et
(708) envoyer, sur le dispositif de confiance du titulaire de carte (130), la clé publique; et
l'au moins un processeur de dispositif à de confiance du titulaire de carte est en outre configuré pour:
recevoir, depuis le système d'application d'acheteur (142), la clé publique; et
avant l'envoi de l'identification de détenteur de carte sécurisé sur le système d'application d'acheteur (142), crypter l'identification de détenteur de carte sécurisé avec la clé publique,
dans lequel, pour obtenir la clé publique, l'au moins un processeur de système d'application d'acheteur est en outre configuré pour réaliser l'une des actions suivantes:
(704) recevoir, depuis le dispositif de commerçant (110), la clé publique; ou
générer la clé publique.

5. Système de vérification d'identité électronique tel que revendiqué selon la revendication 1, dans lequel:
l'au moins un processeur de dispositif de commerçant est en outre configuré pour:
envoyer, sur le système d'application d'acheteur (142), une clé publique;
l'au moins un processeur de système d'application d'acheteur est en outre configuré pour:
recevoir, depuis le dispositif de commerçant (110), une clé publique; et
(708) envoyer, sur le dispositif de confiance du titulaire de carte (130), la clé publique; et
l'au moins un processeur de dispositif de confiance du titulaire de carte est en outre configuré pour:
recevoir, depuis le système d'application d'acheteur (142), une clé publique; et
avant l'envoi de l'identification de détenteur de carte sécurisé sur le système d'application d'acheteur, crypter l'identification de détenteur de carte sécurisé avec la clé publique.

6. Procédé (200, 400, 500, 700) de vérification d'une identité électronique, le procédé comprenant:
l'envoi, depuis un dispositif de commerçant (110) sur un système d'application d'acheteur (142), d'une demande d'un identifiant (ID) de transaction pour une transaction entre le dispositif de commerçant (110) et un dispositif de confiance du titulaire de carte (130);
(404) l'obtention, au niveau du système d'application d'acheteur (142), de l'ID de transaction, dans lequel l'ID de transaction est généré au niveau du système d'application d'acheteur (142) ou l'ID de transaction est reçu depuis le dispositif de commerçant (110) ;
la réception, au niveau du dispositif de commerçant (110) depuis le système d'application d'acheteur (142), de l'ID de transaction;
la génération, au niveau du système d'application d'acheteur (142), d'un élément associé à l'ID de transaction, et l'envoi, sur le dispositif de commerçant (110), de l'élément associé à l'ID de transaction;
la réception, au niveau du dispositif de commerçant (110) depuis le système d'application d'acheteur (142), de l'élément associé à l'ID de transaction;
(504) l'affichage, au niveau du dispositif de commerçant (110), de l'élément associé à l'identifiant (ID) de transaction;
la réception, au niveau du dispositif de confiance du titulaire de carte (130), de l'élément associé à l'ID de transaction;
(408) le dispositif de confiance du titulaire de carte (130) établissant une connexion de transmission sécurisée entre le dispositif de confiance du titulaire de carte (130) et le système d'application d'acheteur (142) en réponse à la réception de l'élément associé à l'ID de transaction;
(410) la réception, au niveau du système d'application d'acheteur (142) depuis le dispositif de confiance du titulaire de carte (130), d'une identification de détenteur de carte sécurisé, dans lequel l'identification de détenteur de carte sécurisé inclut un PIN et/ou un identifiant biométrique;
(412) le système d'application d'acheteur (142) envoyant sur le dispositif de commerçant (110) l'identification de détenteur de carte sécurisé; et
la réception, au niveau du dispositif de commerçant (110) depuis le système d'application d'acheteur (142), de l'identification de détenteur de carte sécurisé.

7. Procédé tel que revendiqué selon la revendication 6, dans lequel l'obtention de l'ID de transaction comprend:
l'envoi, depuis le dispositif de commerçant sur le système d'application d'acheteur, d'une demande de l'ID de transaction;
la génération, au niveau du système d'application d'acheteur, de l'ID de transaction; et
la réception, au niveau du dispositif de commerçant depuis le système d'application d'acheteur, de l'ID de transaction.

8. Procédé tel que revendiqué selon la revendication 6, dans lequel l'obtention de l'ID de transaction comprend:
l'envoi, depuis le dispositif de commerçant sur le système d'application d'acheteur, de l'ID de transaction à associer à la transaction entre le dispositif de commerçant et le dispositif de confiance du titulaire de carte;
l'association, au niveau du système d'application d'acheteur, de l'ID de transaction à la transaction entre le dispositif de commerçant et le dispositif de confiance du titulaire de carte; et
la réception, au niveau du dispositif de commerçant depuis le système d'application d'acheteur, d'une confirmation du fait que l'ID de transaction est associé à la transaction entre le dispositif de commerçant et le dispositif de confiance du titulaire de carte.

9. Procédé tel que revendiqué selon la revendication 6, comprenant en outre:
l'obtention, au niveau du système d'application d'acheteur, d'une clé publique;
l'envoi, depuis le système d'application d'acheteur sur le dispositif de confiance du titulaire de carte, de la clé publique; et
avant que le dispositif de confiance du titulaire de carte n'envoie l'identification de détenteur de carte sécurisé sur le système d'application d'acheteur, le cryptage, au niveau du dispositif de confiance du titulaire de carte, de l'identification de détenteur de carte sécurisé avec la clé publique,
dans lequel l'obtention de la clé publique comprend la réalisation de l'une des actions suivantes:
la réception, depuis le dispositif de commerçant au niveau du système d'application d'acheteur, de la clé publique; ou
la génération, au niveau du système d'application d'acheteur, de la clé publique.

10. Procédé tel que revendiqué selon la revendication 6, comprenant en outre:
l'envoi, depuis le dispositif de commerçant sur le système d'application d'acheteur, d'une clé publique;
l'envoi, depuis le système d'application d'acheteur sur le dispositif de confiance du titulaire de carte, de la clé publique; et
avant que le dispositif de confiance du titulaire de carte n'envoie l'identification de détenteur de carte sécurisé sur le système d'application d'acheteur, le cryptage, au niveau du dispositif de confiance du titulaire de carte, de l'identification de détenteur de carte sécurisé avec la clé publique.
